# EUROPEAN PATENT APPLICATION

(11) **EP 2 940 076 A1**
(43) Date of publication of application: **04.11.2015**
(21) Application number: 13868845.2
(22) Date of filing: 30.12.2013
(51) Int. Cl.: C08L 77/00, C08L 23/10, C08K 7/14, C08K 5/13

(54) **POLYAMIDE RESIN COMPOSITION**

(30) Priority: 28.12.2012 KR 20120157459
(71) Applicant: Kolon Plastics, Inc., Gimcheon-si, Gyeongsangbuk-do 740-180 (KR)
(72) Inventor: JEONG, Heon Kyu, Gimcheon-si Gyeongsangbuk-do 740-150 (KR); KIM, Chang Gyu, Gumi-si Gyeongsangbuk-do 730-180 (KR)
(74) Representative: Ter Meer Steinmeister & Partner
(86) International application number: PCT/KR2013/012390
(87) International publication number: WO 2014/104856

(57) **Abstract**

Disclosed is a polyamide resin composition, which includes a polyamide resin and 5 ~ 100 parts by weight of a polypropylene resin, 10 ~ 135 parts by weight of glass fiber, and 0.1 ~ 8 parts by weight of a phenolic heat-resistance agent, based on 100 parts by weight of the polyamide resin, and which also has low ion release, few changes in properties even when being exposed to external environment of high or low temperature, and high productivity, thus making it easy to serve as a material for a humidifier for a fuel cell membrane for vehicles.

## Description

### Technical Field

The present invention relates to a polyamide resin composition, which is used for a humidifier that functions to maintain and improve performance of a fuel cell system for vehicles.

### Background Art

Fuel cells are a high-efficiency pollution-free power generation device for directly converting chemical energy of hydrogen and oxygen into electric energy via an electrochemical reaction, and operate in a principle where electricity is generated together with water and heat via an electrochemical reaction that is the reverse electrolysis of water by supplying oxygen and hydrogen to a cathode and an anode, respectively. Unlike typical chemical cells such as dry cells or storage cells, fuel cells are capable of continuously producing electricity so long as hydrogen and oxygen are supplied, and have no heat loss and thus exhibit twice or more the efficiency of internal combustion engines. Accordingly, fuel cells are eco-friendly and may reduce worries about the depletion of fossil fuel.

Such fuel cells may be classified into, depending on the kind of electrolyte used, polymer electrolyte fuel cells, phosphate fuel cells, molten carbonate fuel cells, solid oxide fuel cells, and alkaline fuel cells.

The major factor in improving performance of polymer electrolyte fuel cells is that an appropriate temperature and a predetermined amount of moisture are supplied to a polymer electrolyte membrane of a membrane-electrode assembly to maintain moisture content. This is because power generation efficiency may be drastically lowered when the polymer electrolyte membrane is dried.

Hence, a humidifier is essential to maintain appropriate temperature and humidity of the polymer electrolyte membrane of the membrane-electrode assembly.

A humidifier plays a role in supplying water vapor of unreacted gas to a polymer electrolyte membrane using a membrane that enables only the water vapor contained in the unreacted gas to selectively pass through the polymer electrolyte membrane, and may be advantageously fabricated to be lightweight and small. Such a selective transmission membrane preferably includes a hollow fiber membrane having a large transmission area per unit volume.

A material for use in a humidifying membrane should not adversely affect performance of a hollow fiber membrane. Since ions may deteriorate performance of the membrane over time, they should not be released from the material for a humidifier. Even when ions are released, the amount thereof should be low. Also, when such a material is applied to vehicles, properties such as vibration resistance, heat resistance, and cold resistance should be superior, and when applied to buildings, impact resistance should be good.

To satisfy such requirements, a variety of polymer materials have been proposed. In particular, a highly heat-resistant polyamide resin is superior in mechanical properties as well as heat and cold resistance, and is thus recently receiving attention as a material for humidifiers.

However, such a highly heat-resistant polyamide resin, which has a high melting temperature, may possess a considerably long cycle time upon product molding, undesirably resulting in poor productivity.

Accordingly, required is the development of materials for humidifiers, which may shorten the long cycle time upon molding while satisfying advantages of a highly heat-resistant polyamide resin, including low ion release, superior mechanical properties, high heat resistance, and high cold resistance.

### Disclosure

### Technical Problem

Therefore, the present invention is intended to provide a polyamide resin composition suitable for use in a humidifier for a fuel cell for vehicles, which may exhibit superior mechanical properties, high heat resistance, high cold resistance, and high productivity, as well as very low ion release even when being exposed to inner environment of vehicles, such as conditions of high temperature and high humidity for a long period of time.

### Technical Solution

A preferred first embodiment of the present invention provides a polyamide resin composition, comprising: a polyamide resin; and 5 ~ 100 parts by weight of a polypropylene resin, 5 ~ 135 parts by weight of glass fiber, and 0.01 ~ 8 parts by weight of a phenolic heat-resistance agent, based on 100 parts by weight of the polyamide resin, wherein an electrical conductivity is 80 µS or less, as measured after manufacturing a sample having a surface area of 80 cm² therefrom, immersing the sample in 200 mL of deionized water, and then heating the sample at 80°C for 1500 hrs, and a total concentration of cations comprising sodium, potassium, magnesium, calcium, copper, iodine, phosphorus, lithium, aluminum, manganese, iron, and nickel is 8 ppm or less, as measured after manufacturing a sample having a surface area of 270 cm² therefrom, immersing the sample in 200 mL of deionized water and then heating the sample at 80°C for 168 hrs.

In this embodiment, the polyamide resin may have a relative viscosity of 2.0 ~ 3.5, and may include at least one selected from among Polyamide 6, Polyamide 12, Polyamide 66, Polyamide 6/66, Polyamide 6/12, Polyamide 6/6T, Polyamide 6/6I, and copolymers thereof.

In this embodiment, the polypropylene resin may include at least one compatibilizer selected from among homopolypropylene, an ethylenepropylene copolymer, and an ethyleneoctene copolymer, which have 0.4 ~ 2 wt% of maleic anhydride grafted thereto.

In this embodiment, the polypropylene resin may have a melt index (MI) of 3 ~ 50 g/10 min as measured by ASTM D1238. Also, in this embodiment, the phenolic heat-resistant agent may be represented by Structural Formula (I) below: 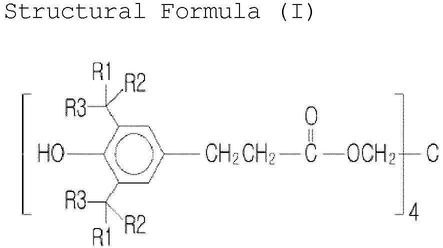 wherein R1 is a methyl group, and R2 and R3 are identical or different substituents selected from among alkyl groups having 1 to 5 carbon atoms.

In this embodiment, the polyamide resin composition may further comprise at least one additive selected from among an antioxidant, a flame retardant, a fluorescent brightener, a plasticizer, a thickener, an antistatic agent, a release agent, a pigment, and a nucleating agent.

In this embodiment, the polyamide resin composition may have a tensile strength of 1,100 kg/cm² or more by ASTM D638, a flexural strength of 1,700 kg/cm² or more by ASTM D790, and a thermal deformation temperature of 150°C or more under a load of 4.6 kg/cm² by ASTM D64.

This polyamide resin composition may be used for a humidifier for a fuel cell membrane that is provided in a vehicle.

### Advantageous Effects

According to the present invention, a polyamide resin composition has mechanical properties that are not significantly changed even when being allowed to stand under conditions of long-term vibration, high temperature, or low temperature. Furthermore, this resin composition can possess superior physical properties and heat resistance, and exhibits ion release to a lesser extent even when being immersed in water for a long period of time. Hence, this resin composition is suitable for use in a humidifier that functions to maintain and improve performance of a fuel cell system.

### Best Mode

Hereinafter, a detailed description will be given of the present invention.

The present invention addresses a polyamide resin composition, comprising: a polyamide resin; and 5 ~ 100 parts by weight of a polypropylene resin, 10 ~ 135 parts by weight of glass fiber, and 0.1 ~ 8 parts by weight of a phenolic heat-resistance agent, based on 100 parts by weight of the polyamide resin.

Generally, a polyamide resin refers to a thermoplastic resin having an amide group (-CONH-). Among examples of the polyamide resin, Polyamide 6 and Polyamide 66 are respectively represented by Structural Formulas (II) and (III) below.

Structural Formula (II) -NH-(CH₂)₅-CO)ₙ

Structural Formula (III) -(NH-(CH₂)₆-HN-CO-(CH₂)₄-CO)ₙ

In Structural Formulas (II) and (III), n is an integer ranging from 200 to 15,000.

In the present invention, the polyamide resin may include at least one selected from among Polyamide 6, Polyamide 12, Polyamide 66, Polyamide 6/66, Polyamide 6/12, Polyamide 6/6T, Polyamide 6/6I, and copolymers thereof. Preferably useful are Polyamide 6, Polyamide 66, and a mixture thereof.

The polyamide resin has a relative viscosity of 2.0 ~ 3.5, wherein the relative viscosity is measured by adding 1 g of a polyamide resin to 100 mL of 96% sulfuric acid at 20°C.

If the relative viscosity is less than 2.0, rigidity and heat resistance may deteriorate. In contrast, if the relative viscosity exceeds 3.5, excessive frictional heat may occur between a screw and a resin upon fast production, and the resin may decompose or high pressure for molding is required, thus incurring problems on a molding machine or a mold, undesirably making it difficult to perform injection molding.

In the present invention, the polypropylene resin has poor compatibility with polyamide. Hence, a compatibilizer may be used to maximize compatibility between these two resins.

In the case where compatibility is not ensured, phase separation may occur between polyamide and polypropylene resins, thus increasing cation concentration and electrical conductivity due to the polyamide resin having high ion release compared to the polypropylene resin.

The compatibilizer may include at least one selected from among homopolypropylene, an ethylenepropylene copolymer, and an ethyleneoctene copolymer, which have 0.4 ~ 2 wt% of maleic anhydride grafted thereto. As such, the amount of grafted maleic anhydride, that is, 0.4 ~ 2 wt%, is determined based on the total amount of each of homopolypropylene, an ethylenepropylene copolymer, and an ethyleneoctene copolymer, which have maleic anhydride grafted thereto. If the amount of grafted maleic anhydride is less than 0.4 wt%, bondability may become poor, undesirably deteriorating functionality as a compatibilizer and exhibiting insignificant improvements in impact resistance. In contrast, if the amount thereof exceeds 2 wt%, the excessive amount may remain as an unreacted amount, undesirably causing discoloration upon contact with water and generating scratch marks on the surface of products.

Also, the polypropylene resin may comprise polypropylene having a melt index (MI) of 3 ~ 50 g/10 min and 1 ~ 35 wt% of a compatibilizer, such as homopolypropylene, an ethylenepropylene copolymer, or an ethyleneoctene copolymer, having 0.4 ~ 2 wt% of maleic anhydride grafted thereto. As such, the melt index is defined as the amount of a polymer melt flowing through an orifice at 230°C using a 2160 g weight according to ASTM D1238.

As for the polypropylene resin, if the amount of the compatibilizer including at least one selected from among homopolypropylene, an ethylenepropylene copolymer, and an ethyleneoctene copolymer, which have 0.4 ~ 2 wt% of maleic anhydride grafted thereto, is less than 1 wt%, compatibility between the polypropylene resin and the polyamide resin may deteriorate and thus an effect of enhancing impact resistance may become insignificant. In contrast, if the amount thereof is greater than 35 wt%, improvements in properties relative to the excessive amount may become insignificant, undesirably negating economic benefits.

Also, if the melt index is less than 3 g/10 min or exceeds 50 g/10 min, phase separation may occur upon kneading with a polyamide resin in an extruder.

The amount of the polypropylene resin may be set to 5 ~ 100 parts by weight based on 100 parts by weight of the polyamide resin composition. If the amount of polypropylene is less than 5 parts by weight, impact resistance may decrease. In contrast, if the amount thereof exceeds 100 parts by weight, heat resistance may become poor and thus post-deformation may take place. Hence, this amount is preferably set to the above range. However, such an amount may be adjusted depending on the required properties.

In an embodiment of the present invention, the polyamide resin composition may further include glass fiber to enhance rigidity thereof. Useful in the present invention, glass fiber is typical glass fiber having a length of 3 ~ 6 mm in chopped form, and is composed mainly of CaO· SiO₂· Al₂O₃ comprising 10 ~ 20 parts by weight of CaO, 50 ~ 70 parts by weight of SiO₂, and 2 ~ 15 parts by weight of Al₂O₃. Preferably useful is glass fiber subjected to silane coupling surface treatment to ensure interfacial adhesion to a final composition. The glass fiber may have a diameter of 10 ~ 13 µm. The glass fiber used in the composition of the present invention is exemplified by "CS-311" available from KCC, and the amount thereof is set to 10 ~ 135 parts by weight based on 100 parts by weight of the polyamide resin. If the amount of glass fiber is less than 10 parts by weight, tensile strength and flexural strength may decrease. In contrast, if the amount thereof exceeds 135 parts by weight, a molded product may have poor surface appearance or electrical conductivity may increase.

Since the glass fiber is composed mainly of Ca, Si, and Al cations, it may cause the cation concentration and the electrical conductivity to increase. Thus, to suppress cation release due to hydrolysis, the use of glass fiber subjected to silane surface treatment is effective in the present invention. Furthermore, enhancing adhesion to a polyamide resin and a polypropylene resin to prevent the glass fiber from being exposed to water is the most effective at suppressing cation release.

In an embodiment of the invention, a phenolic heat-resistant agent may be used to increase heat resistance of the polyamide resin composition. The phenolic heat-resistant agent may be represented by Structural Formula (I) below. The phenolic heat-resistant agent may be used in an amount of 0.1 ~ 8 parts by weight based on 100 parts by weight of the polyamide resin. If the amount of the phenolic heat-resistant agent is less than 0.1 parts by weight based on 100 parts by weight of the polyamide resin, an effect of increasing heat resistance cannot be obtained. In contrast, if the amount thereof exceeds 8 parts by weight, an effect of increasing heat resistance may become insignificant and thus there are no economic benefits.

The phenolic heat-resistant agent functions to decrease decomposition of a polymer. When the decomposition of the polymer is suppressed in this way, an increase in electrical conductivity due to ions released from the polymer may be prevented.

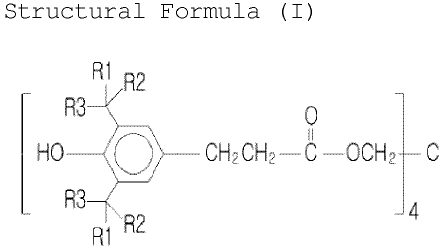

In Structural Formula (I), R1 is a methyl group, and R2 and R3 each are identical or different substituents selected from among alkyl groups having 1 to 5 carbon atoms.

As shown in the following examples, the polyamide resin composition has a tensile strength of 1,100 kg/cm² or more by ASTM D638, a flexural strength of 1,700 kg/cm² or more by ASTM D790, a thermal deformation temperature of 150°C or more under a load of 4.6 kg/cm² by ASTM D648, and an electrical conductivity of 80 µS or less by the method that will be described below. If the electrical conductivity of the polyamide resin composition exceeds 80 µS, 5% or more of the total sulfonic acid group of the membrane may be polluted and thus water flux may vary, undesirably deteriorating the membrane, resulting in shortened lifetime.

For electrical conductivity, a sample having a surface area of 80 cm² is manufactured by injection, completely immersed in a hard glass bottle containing 200 mL of deionized water, sealed, heated in an oven at 80°C for 1500 hrs, taken out of the oven, and allowed to stand to room temperature, followed by measuring electrical conductivity. As such, deionized water refers to water from which dissolved ions are thoroughly removed, and is typically obtained using an ion exchange resin, and is utilized for industrial water and drinking water. Also, siemens is represented as the unit of ion concentration, that is, the unit of electrical conductivity, as obtained by dividing 1 by ohm that is the unit of electrical resistance. Such electrical conductivity is measured using SEVEN COMPACT available from METTLER TOLEDO with an InLab 741 sensor.

The polyamide resin composition has mechanical properties that are not significantly changed even when being allowed to stand under conditions of long-term vibration, high temperature, or low temperature. Furthermore, this resin can possess superior physical properties and heat resistance, and is thus suitable for use in humidifiers.

The polyamide resin composition may be prepared by melt kneading a polyamide resin, a polypropylene resin, a phenolic heat-resistant agent, and glass fiber at 240 ~ 270°C.

If the melt kneading process is performed at a temperature lower than 240°C, it cannot be sufficiently conducted due to the processing temperature similar to the melting point of the polyamide resin. In contrast, if the processing temperature is higher than 270°C, the additive or the polyamide resin may be thermally decomposed or volatilized, undesirably deteriorating the quality of the product.

When the polyamide resin composition is prepared, a typically useful melt kneading method and device may be applied. A specific example of the melt kneading device may include a single- or twin-screw extruder, and such an extruder may have two or more feeders for uniform kneading of the materials. When a single- or twin-screw extruder having a first and a second feeder is used, the polyamide resin, the polypropylene resin, and the heat-resistant agent are fed into the first feeder, and the glass fiber is fed into the second feeder, thereby achieving uniform kneading effects by sharing the screw in the extruder.

In order to reduce volatility of the additive and to maximize the properties of the composition upon melt kneading, the retention time in the device such as the extruder is preferably minimized. Also, an antioxidant, a flame retardant, a fluorescent brightener, a plasticizer, a thickener, an antistatic agent, a release agent, a pigment, a nucleating agent, and mixtures thereof may be added within a range that does not conflict with the purpose of the present invention.

As mentioned above, the polyamide resin composition may be easily applied to a humidifier because it has mechanical properties that are not significantly changed even when being allowed to stand under conditions of long-term vibration, high temperature, or low temperature and also because it possesses superior physical properties and high heat resistance. Furthermore, the polyamide resin composition may be employed in a hollow fiber membrane humidifier that is required to increase power generation efficiency of a stack of a fuel cell vehicle. The humidifier has a circular or rectangular structure having a thickness of 1 ~ 10 mm. The polyamide resin composition may be utilized for a fuel cell membrane humidifier for buildings.

### Mode for Invention

A better understanding of the present invention may be obtained through the following examples that are set forth to illustrate. However, such examples are not to be construed as limiting the present invention.

### Examples 1 to 11

A polyamide resin, a polypropylene resin, and a phenolic heat-resistant agent were added in the compositions of Table 1 below into the first feeder of a twin-screw extruder (made by COPERION, Germany) including material feeders and a product discharger, which were sequentially heated to 240 ~ 270°C, followed by heat melting and kneading, thereby preparing polyamide resin compositions.

After the heat melting and kneading, the polyamide resin compositions were made into chips, which were then dried at 80°C for 4 hr using a dehumidifying dryer.

### Comparative Examples 1 to 5

Polyamide resin compositions were prepared in the same manner as in the above examples, with the exception that the amounts of the components were adjusted as shown in Table 1 below, after which such compositions were made into chips, which were then dried.

**[Table 1]**

| | Component amount (parts by weight) | | | | | |
|---|---|---|---|---|---|---|
| | Polyamide resin | | Polypropylene resin | | Glass fiber | Phenolic heat-resistant agent |
| Ex.1 | 100 | A1 | 28 | P1 | 87 | 2.2 |
| Ex.2 | 100 | A1 | 100 | P1 | 135 | 3.4 |
| Ex.3 | 100 | A1 | 5 | P1 | 71 | 1.8 |
| Ex.4 | 100 | A1 | 3 | P1 | 11 | 0.1 |
| Ex.5 | 100 | A2 | 28 | P1 | 87 | 2.2 |
| Ex.6 | 100 | A3 | 28 | P1 | 87 | 2.2 |
| Ex.7 | 100 | A4 | 28 | P1 | 87 | 2.2 |
| Ex.8 | 100 | A3 | 28 | P2 | 89 | 4.5 |
| Ex.9 | 100 | A3 | 28 | P3 | 87 | 2.2 |
| Ex.10 | 100 | A5 | 28 | P1 | 89 | 4.5 |
| Ex.11 | 100 | A1 | 20 | P1 | 85 | 6.5 |
| C.Ex.1 | 100 | A1 | 3.5 | P1 | 70 | 1.75 |
| C.Ex.2 | 100 | A1 | 136 | P1 | 160 | 4.0 |
| C.Ex.3 | 100 | A1 | 16 | P1 | 6 | 1.2 |
| C.Ex.4 | 100 | A1 | 36 | P1 | 139 | 2.8 |
| C.Ex.5 | 100 | A1 | 20 | P1 | 80 | 0.08 |

| | | | | | | |
|---|---|---|---|---|---|---|
| * A1: 100 wt% of POLYAMIDE 6 (KOLON INDUSTRIES) * A2: 100 wt% of POLYAMIDE 66 (ASCEND) * A3: 90 wt% of POLYAMIDE 6, and 10 wt% of POLYAMIDE 66 * A4: 10 wt% of POLYAMIDE 6, and 90 wt% of POLYAMIDE 66 * A5: 100 wt% of POLYAMIDE 6 (Relative viscosity of 3.3) (KOLON INDUSTRIES) * A1 ~ A4: Relative viscosity of 2.7 *P1: Polypropylene resin including homopolypropylene having 1 wt% of maleic anhydride grafted thereto (made by Exxonmobil) *P2: Polypropylene resin including ethyleneoctene elastomer having 1 wt% of maleic anhydride grafted thereto (made by Dupont) *P3: Polypropylene resin including ethylenepropylene elastomer having 1 wt% of maleic anhydride grafted thereto (made by Dupont) | | | | | | |

The properties, electrical conductivity, and cation concentration of the polyamide resin compositions of the above examples and comparative examples were evaluated by the following criteria. The results are given in Table 2 below.
(1) Tensile strength: A 1/8 inch sample was manufactured and the tensile strength thereof was measured by ASTM D638. As such, a value of less than 1,100 kg/cm² was determined to be poor.
(2) Flexural strength: A 1/8 inch sample was manufactured and the flexural strength thereof was measured by ASTM D790. As such, a value of less than 1,700 kg/cm² was determined to be poor.
(3) Thermal deformation temperature: A 1/4 inch sample was manufactured and the thermal deformation temperature thereof was measured by ASTM D648. As such, a value of less than 150°C under a load of 4.6 kg/cm² was determined to be poor.

Based on the evaluation criteria of the properties, the properties of the polyamide resin compositions of Examples 1 to 10 and Comparative Examples 1 to 6 were measured.
(4) Electrical conductivity: Samples having a surface area of 80 cm² were manufactured using the polyamide resin compositions of the above examples and comparative examples, completely immersed in 200 mL of deionized water, and allowed to stand at 80°C for 1500 hrs, followed by measuring electrical conductivity.
(5) Cation concentration: Samples having a surface area of 270 cm² were manufactured using the polyamide resin compositions of the above examples and comparative examples, completely immersed in 200 mL of deionized water, and allowed to stand at 80°C for 168 hrs, followed by measuring the cation concentrations of sodium, potassium, magnesium, calcium, copper, iodine, phosphorus, lithium, aluminum, manganese, iron, and nickel using ICP-MS.

**[Table 2]**

| | Tensile strength (kg/cm²) | Flexural strength (kg/cm²) | Thermal deformation temp. (°C) | Electrical conductivity (µS) | Cation concentration (ppm) | Note |
|---|---|---|---|---|---|---|
| Ex.1 | 1530 | 2278 | 213 | 52 | 3.3 | - |
| Ex.2 | 1351 | 2054 | 162 | 42 | 2.8 | - |
| Ex.3 | 1895 | 2978 | 218 | 78 | 7.5 | - |
| Ex.4 | 1158 | 1891 | 198 | 78 | 7.6 | - |
| Ex.5 | 1596 | 2334 | 234 | 64 | 4.3 | - |
| Ex.6 | 1541 | 2264 | 217 | 55 | 3.5 | - |
| Ex.7 | 1572 | 2305 | 231 | 62 | 4.3 | - |
| Ex.8 | 1548 | 2275 | 219 | 51 | 3.2 | - |
| Ex.9 | 1584 | 2315 | 218 | 57 | 4.4 | - |
| Ex.10 | 1579 | 2321 | 219 | 60 | 5.0 | - |
| Ex.11 | 1576 | 2283 | 210 | 51 | 3.3 | - |
| C.Ex.1 | 1890 | 2975 | 218 | 85 | 8.2 | - |
| C.Ex.2 | 1051 | 1740 | 155 | 38 | 2.8 | - |
| C.Ex.3 | 880 | 1490 | 183 | 48 | 3.1 | - |
| C.Ex.4 | 1678 | 2144 | 220 | 89 | 8.4 | poor Surface appearance |
| C.Ex.5 | 1568 | 2257 | 206 | 91 | 10.8 | |

| | | | | | | |
|---|---|---|---|---|---|---|
| * Poor surface appearance: Flow marks of glass fiber were formed on the surface of a product and thus the surface was not smooth. | | | | | | |

As is apparent from Table 2, in Examples 1 to 11 comprising a polyamide resin and a polypropylene resin with glass fiber and a heat-resistant agent at a composition ratio according to the present invention, properties such as tensile strength and flexural strength, and thermal deformation temperature, electrical conductivity, and cation concentration were superior, compared to Comparative Examples 1 to 5 wherein the amounts of the components fall out of the ranges of the present invention.

## Claims

1. A polyamide resin composition, comprising:
a polyamide resin; and
5 ~ 100 parts by weight of a polypropylene resin, 10 ~ 135 parts by weight of glass fiber, and 0.1 ~ 8 parts by weight of a phenolic heat-resistance agent, based on 100 parts by weight of the polyamide resin,
wherein an electrical conductivity is 80 µS or less, as measured after manufacturing a sample having a surface area of 80 cm² therefrom, immersing the sample in 200 mL of deionized water, and then heating the sample at 80°C for 1500 hrs, and
a total concentration of cations comprising sodium, potassium, magnesium, calcium, copper, iodine, phosphorus, lithium, aluminum, manganese, iron, and nickel is 8 ppm or less, as measured after manufacturing a sample having a surface area of 270 cm² therefrom, immersing the sample in 200 mL of deionized water and then heating the sample at 80°C for 168 hrs.

2. The polyamide resin composition of claim 1, wherein the polyamide resin has a relative viscosity of 2.0 ~ 3.5, and comprises at least one selected from among Polyamide 6, Polyamide 12, Polyamide 66, Polyamide 6/66, Polyamide 6/12, Polyamide 6/6T, Polyamide 6/6I, and copolymers thereof.

3. The polyamide resin composition of claim 1, wherein the polypropylene resin includes 1 ~ 35 wt% of at least one compatibilizer selected from among homopolypropylene, an ethylenepropylene copolymer, and an ethyleneoctene copolymer, which have 0.4 ~ 2 wt% of maleic anhydride grafted thereto.

4. The polyamide resin composition of claim 1, wherein the polypropylene resin has a melt index (MI) of 3 - 50 g/10 min as measured by ASTM D1238.

5. The polyamide resin composition of claim 1, wherein the phenolic heat-resistant agent is represented by Structural Formula (I) below: 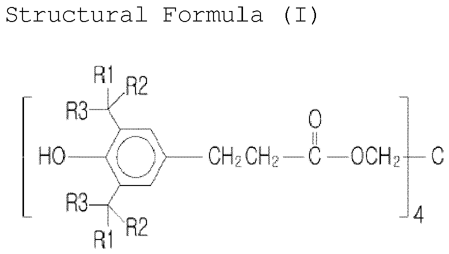 wherein R1 is a methyl group, and R2 and R3 are identical or different substituents selected from among alkyl groups having 1 to 5 carbon atoms.

6. The polyamide resin composition of claim 1, further comprising at least one additive selected from among an antioxidant, a flame retardant, a fluorescent brightener, a plasticizer, a thickener, an antistatic agent, a release agent, a pigment, and a nucleating agent.

7. The polyamide resin composition of claim 1, having:
a tensile strength of 1,100 kg/cm² or more by ASTM D638,
a flexural strength of 1,700 kg/cm² or more by ASTM D790, and
a thermal deformation temperature of 150°C or more under a load of 4.6 kg/cm² by ASTM D64.

8. The polyamide resin composition of claim 1, which is used for a humidifier for a fuel cell membrane that is provided in a vehicle.
